# EUROPEAN PATENT APPLICATION

(11) **EP 3 839 943 A1**
(43) Date of publication of application: **23.06.2021**
(21) Application number: 19219147.6
(22) Date of filing: 20.12.2019
(51) Int. Cl.: G10L 15/22, G10L 17/18, G10L 17/10, A47J 43/07, G06F 3/16, G06K 9/00, G10L 15/16

(54) **INSTRUCTION VALIDATION SYSTEM**

(30) Priority: 18.12.2019 PT 2019116000
(71) Applicant: Modelo Continente Hipermercados, S.A., 4464-503 Senhora da Hora (PT)
(72) Inventor: FARIA ROCHA, DUARTE NUNO, 3800-423 AVEIRO (PT)
(74) Representative: do Nascimento Gomes, Rui

(57) **Abstract**

The present application describes an instruction validation system for kitchen machines. Such system provides a comfortable way of operating a kitchen machine, without implying a direct contact between user and the device to be performed, and at the same time ensuring its safe operation against non-authorized users. For that purpose, the kitchen machine is comprised by an interface unit comprising receiving means arranged to receive an audio input data containing an operative instruction, a validation unit configured to authenticate the audio input data and a converter unit adapted to convert the authenticated audio input data into a machine routine programmed to operate the kitchen machine hardware elements.

## Description

### FIELD OF THE INVENTION

The present application is enclosed in the field of kitchen machines, in particular kitchen machines which are electrically ran/operated, typically comprising a mixing cup in which automatic mixing actions are performed, and relates to a system for controlling the operation of said kitchen machine. In particular, the present application discloses an instruction validation system able to validate an operative instruction programmed by an user allowing the kitchen machine to be remotely operable.

### PRIOR ART

Solutions exist in the art, such as the case of patent application EP3145376, where a mechanism for providing remote operations of kitchen machines is disclosed. Such mechanism relies on a speech recognition system, that is designed to compare speech signals of a user with known control commands for operating the kitchen machine. An activation device is used for activating the voice recognition system, wherein the activation device has an optical detection system and is set up to activate the voice recognition system as a function of information acquired by the optical detection system.

Patent application EP2925200 describes a kitchen machine comprising an acoustic transducer and a speech recognition module used to cause such machine to carry out routine tasks. For that purpose, it is included an optical system in form of an electronic camera with evaluations electronics to check whether the user is located directly in front of the food processor and also faces it.

However, all the existing solutions present certain limitation regarding the location of the user towards the kitchen machine to be operated and regarding the effectiveness of the user identification in unfavourable noise conditions.

The present solution intended to innovatively overcome such issues.

### SUMMARY OF THE INVENTION

It is therefore an object of the present invention an instruction validation system that allows a kitchen machine remotely operable to authorized users.

Such features defining the instruction validation system developed therefore provides a comfortable way of operating a kitchen machine, without implying a direct contact between user and apparatus to be performed, and at the same time ensuring its safe operation against non-authorized users.

In an advantageous configuration of the instruction validation system of the present invention the it is comprised by at leastone kitchen machine which is further comprised by an interface unit comprising receiving means arranged to receive an audio input data containing an operative instruction, a validation unit configured to authenticate the audio input data and a converter unit in order to convert the authenticated audio input data into a machine routine programmed to operate the kitchen machine hardware elements.

In another advantageous mode of the instruction validation system of the present invention the validation unit and the converter unit comprise artificial intelligence modules adapted to more effectively extract and convert the operative instructions contained in the audio input data emitted by an user into a machine routine, allowing to take into consideration the presence of background noise.

### DESCRIPTION OF FIGURES

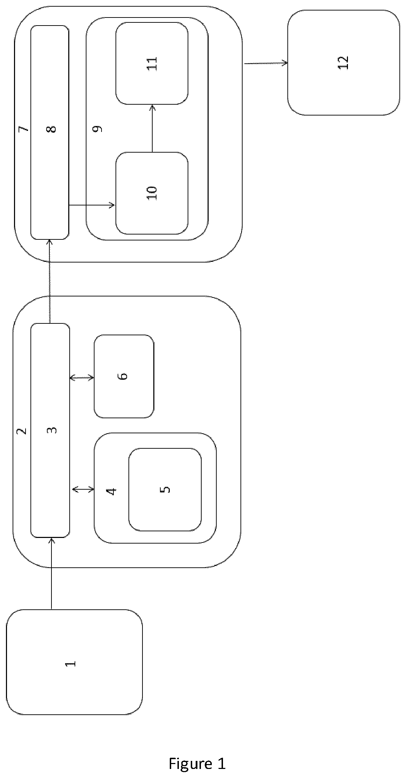

Figure 1 - representation of an embodiment of the instruction validation system of the present invention, wherein the reference signs represent:
   1 - interface unit;
   2 - validation unit;
   3 - operation criteria module of the validation unit;
   4 - speech recognition engine;
   5 - first classifier;
   6 - facial recognition engine;
   7 - converter unit;
   8 - operation criteria module of the converter unit;
   9 - lexicon engine:
   10 - second classifier;
   11 - correlator controller;
   12 - kitchen machine.

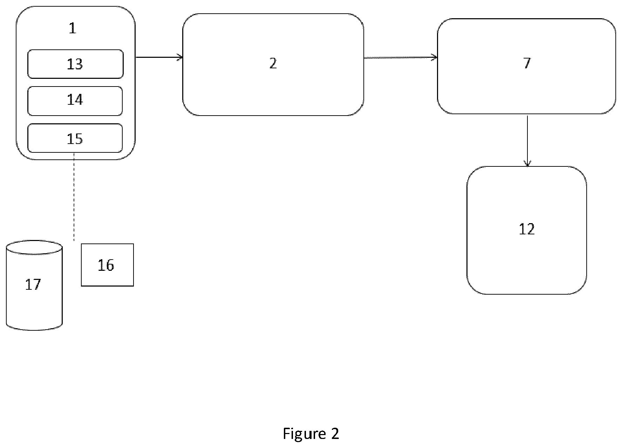

Figure 2 - representation of an embodiment of the instruction validation system of the present invention, wherein the reference signs represent:
   1 - interface unit;
   2 - validation unit;
   7 - converter unit;
   12 - kitchen machine;
   13 - omnidirectional microphone;
   14 - video camera;
   15 - wireless module;
   16 - mobile processing device;
   17 - remote server database.

### DETAILED DESCRIPTION

The more general and advantageous configurations of the present invention are described in the Summary of the invention. Such configurations are detailed below in accordance with other advantageous and/or preferred embodiments of implementation of the present invention.

It is presented an instruction validation system for kitchen machines. Such kitchen machine are electrically ran/operated and comprises i.) a mixing cup, ii.) mixing means provided in the mixing cup, iii.) a base station suitable for coupling of the mixing cup and which thereby is able to provide motion to the mixing means and iv.) means for automatically measuring weight or volume of food products placed into the mixing cup.

In a preferred embodiment of the instruction validation system of the present invention, it is comprised by at least one kitchen machine, wherein such kitchen machine is further comprised by an interface unit, a validation unit and a converter unit. The interface unit comprises receiving means arranged to receive an audio input data containing an operative instruction. Said audio input data is sent remotely by an user. In the context of the present application, remotely should be interpreted as establishing a communication with the kitchen machine not implying a physical interaction between a user and said machine. The validation unit is configured to authenticate the audio input data received by the interface unit and comprises validation means, processing means and an operation criteria module executable by said processing means. The converter unit is configured to convert an authenticated audio input into a machine routine programmed to operate the kitchen machine hardware elements i.) to iv.).

In one alternative embodiment of the instruction validation system, the receiving means of the interface unit are configured to collect audio data in the vicinity of the kitchen machine, and includes an omnidirectional microphone. The use of such kind of microphone allows the user to operate the kitchen machine without the need for a specific position and orientation in relation to the kitchen machine.

In another alternative embodiment of the instruction validation system, the validation means of the validation unit comprises a speech recognition engine. Particularly, the operation criteria module when is executed by the processing means of the validation unit configure the speech recognition engine to perform operations such as implementing a first neural network-based classifier. Such classifier is used for authenticating an audio input data received by the interface unit. For that end, the first classifier includes criteria either for processing and semantic classification of the audio input data. Particularly, the first classifier is adapted to process at least a portion of the audio input data with an artificial neural network, such as support-vector machine, in order to determine whether the portion of the audio input data corresponds to an authorized user. Said artificial neural network is trained using a training audio data set comprising authorization utterance vectors associated to authorized users and background noise either transient and non-transient. An authorization utterance is the result of an acoustic model based on a set of acoustic features of the speech signal produced by a user. Such acoustic features can be a waveform, the fundamental frequency and the firstthree formants, or the energy contour list of frequency features: Mean, maximum, minimum, median value and variance. By storing the authorization utterances of all authorized users, the system ensures that only authorized users are able to operate remotely the kitchen machine. For that, a prior stage of enrolment is required, being performed by the operation criteria module of the validation unit, where voice samples are extracted to create an authorization utterance. The first classifier is also trained using background noise, to take into consideration the typical operating scenario of a kitchen machine and the acoustic particularities of a kitchen environment, which is more prone to echoes or other noise-generating sound interferences. For that purpose, two sets of noise vectors are used such as non-transient noise and transient noise. The first classifier is also adapted to perform semantic classification of the audio input data as authenticated audio input data or non-authenticated audio input data. In particular, an audio input data is classified as an authenticated audio input data if an authorization utterance vector matches a portion of the audio input data. Otherwise, an audio input data is classified as a non-authenticated audio input data if any authorization utterance vector matches a portion of the audio input data.

In another alternative embodiment of the instruction validation system of the present invention, the validation unit comprises a facial recognition engine. In this case, the operation criteria module when executed by the processing means of the validation unit configure such engine to perform processing and semantic classification operations. Particularly, the facial recognition engine is adapted to execute a biometric artificial intelligence algorithm in order to be able to compare predefined extracted facial features from a facial image record with a standard facial record associated to an authorized user. In this regard, the facial image record is collected by the receiving means of the interface unit and the standard facial record is collected during the enrolment stage of an authorized user. The predefined facial features are selected to identify unequivocally a person in a digital image source, and can be related to skin texture information such unique lines, patterns and spots apparent in a person's skin and/or landmarks in the person's face such as relative positions, size, and/or shape of the eyes, nose, cheekbones and jaw. The facial recognition engine is also operable to perform a semantic classification of the audio input data, as authenticated audio input data or non-authenticated audio input data. In this regard, an audio input data is classified as an authenticated audio input data if a standard facial record matches the facial image record. On the other hand, an audio input data is classified as a non-authenticated audio input data if any standard facial record matches the facial image record.

The validation unit can be comprised by the speech recognition engine and by the facial recognition engine, and both can be operable to perform the authentication of an instruction sent by an user. In one embodiment of the instruction validation system, the receiving means of the interface unit comprises a video camera adapted to collect a facial image record from a user. In this case, in the first interaction with the system, the operation criteria will execute the facial recognition engine in order to determine if the user in front of the video camera is an authorized user. If so, he can start operating the kitchen machine by sending oral instructions to the system. Starting with the facial recognition of the user, the operation criteria is able to collect the respective authorization utterance allowing the subsequent instructions to be given without the need of the authorized user to be in front of the video camera.

In another alternative embodiment of the instruction validation system of the present invention, the interface unit is further comprised by a wireless module configured to implement a bidirectional data communication protocol with external entities. In context of the present application an external entity should be understood as a processing device comprising communication means enabling it to interact with the kitchen machine by exchanging operational data. The external unit can be a mobile processing device or a remote server database. Therefore, by projecting the system using a network configuration, the information used for authentication and operation of the kitchen machine can be collected exclusively by such external unit, which become responsible for collecting the authorization utterance and the standard facial record during the enrolment stage and for collecting the audio input data and the facial image record during the operation stage. In an alternative embodiment, the authorization utterance vectors and the standard facial records associated to authorized users are stored in the external entity the external entity being a remote server database.

In another alternative embodiment of the instruction validation system of the present invention, the converter unit comprises a lexicon engine, processing means and an operation criteria module executable by said processing means. The operation criteria module when executed configure the lexicon engine to perform operations including implementing a second neural network-based classifier, to extract utterance events from the authenticated audio input data and implementing an automated semantic analysis processing adapted to identify an operative instruction contained in the authenticated audio input data. Based on the detected operative instruction, the operation criteria module converts it into a machine routine adapted to operate the kitchen machine hardware elements. The second classifier includes criteria for processing the authenticated audio input data with an artificial neural network, such as support-vector machine, adapted to identify words. For that purpose, the artificial neural network is trained using a training audio set comprising strings vectors, extracted from a dictionary database and non-transient background noise and transient background noise vectors. In what concerns to the lexicon engine, it is comprised by a correlator controller provided with processing means configured for generating query semantic representations of the utterance events extracted and for correlating each semantic representation with operative instruction semantic representations to detect an operative instruction. In one embodiment, the string vectors and the operative instruction semantic representations are stored in the remote server database.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. An instruction validation system for kitchen machines, such kitchen machine being electrically ran and comprising i.) a mixing cup, ii.) mixing means provided in the mixing cup, iii.) a base station suitable for coupling of the mixing cup and which thereby is able to provide motion to the mixing means and iv.) means for automatically measuring weight or volume of food products placed into the mixing cup; **characterized in that** the instruction validation system comprises at least one kitchen machine, wherein such kitchen machine is further comprised by:
- An interface unit comprising receiving means arranged to receive an audio input data containing an operative instruction;
- A validation unit comprising validation means, processing means and an operation criteria module executable by said processing means and configured to authenticate the audio input data;
- A converter unit configured to convert an authenticated audio input data into a machine routine programmed to operate the kitchen machine hardware elements i.) to iv.).

2. System according to claim 1, wherein the receiving means of the interface unit includes an omnidirectional microphone.

3. System according to claim 1 or 2 wherein the validation means of the validation unit comprises a speech recognition engine; the operation criteria module when executed configure the speech recognition engine to perform operations including:
- implementing a first neural network-based classifier to authenticate an audio input data received by the interface unit.

4. System according to claim 3, wherein the first classifier includes criteria for:
- processing at least a portion of the audio input data with an artificial neural network adapted to determine whether the portion of the audio input data corresponds to an authorized user; the artificial neural network is trained using a training audio data set comprising authorization utterance vectors associated to authorized users and non-transient background noise and transient background noise vectors;
- a semantic classification of an audio input data as authenticated audio input data or non-authenticated audio input data, such that:
- an audio input data is classified as an authenticated audio input data if an authorization utterance vector matches a portion of the audio input data; and
- an audio input data is classified as a non-authenticated audio input data if any authorization utterance vector matches a portion of the audio input data.

5. System according to any of the previous claims, wherein the validation means of the validation unit comprises a facial recognition engine; the operation criteria module when executed configure the facial recognition engine to perform operations including:
- Executing a biometric artificial intelligence algorithm configured to compare extracted facial features from a facial image record collected by the receiving means of the interface unit with a standard facial record associated to an authorized user;
- a semantic classification of an audio input data as authenticated audio input data or non-authenticated audio input data, such that:
- an audio input data is classified as an authenticated audio input data if a standard facial record matches the facial image record; and
- an audio input data is classified as a non-authenticated audio input data if any standard facial record matches the facial image record.

6. System according to claim5 wherein the facial features are related to skin texture information such as unique lines, patterns and spots apparent in a person's skin and/or landmarks in the person's face such as relative positions, size, and/or shape of the eyes, nose, cheekbones and jaw.

7. System according to any of the previous claims, wherein the receiving means of the interface unit comprises a video camera adapted to collect a facial image record from a user.

8. System according to any of the previous claims, wherein the interface unit further comprises a wireless module configured to implement a bidirectional data communication protocol with external entities.

9. System according to claims 4, 5 and 8, wherein the audio input data, the authorization utterance, the standard facial record and the facial image record are collected by the external entity; the external entity being a mobile processing device such as a smartphone.

10. System according to claims 4, 5 and 8 wherein the authorization utterance vectors and the standard facial records associated to authorized users are stored in the external entity; the external entity being a remote server database.

11. System according to any of the previous claims, wherein the converter unit comprises a lexicon engine, processing means and an operation criteria module executable by said processing means; such operation criteria module when executed configure:
- the lexicon engine to perform operations including:
- Implementing a second neural network-based classifier to extract utterance events from the authenticated audio input data;
- Implementing an automated semantic analysis processing adapted to identify an operative instruction contained in the authenticated audio input data;
- the converter unit to convert the operative instruction into a machine routine.

12. System according to claim 11, wherein the second classifier includes criteria for processing the authenticated audio input data with an artificial neural network adapted to identify words; the artificial neural network is trained using a training audio set comprising strings vectors and non-transient background noise and transient background noise vectors.

13. System according to claims 11 or 12, wherein the lexicon engine comprises a correlator controller configured for:
- generating query semantic representations of the utterance events extracted;
- correlating each semantic representation with operative instruction semantic representations to detect an operative instruction.

14. System according to claims 10, 12 and 13 wherein the string vectors and the operative instruction semantic representations are stored in the remote server database.

15. The system according to any of the previous claims 3 to 11 wherein the artificial neural network is a support-vector machine.
